# EUROPÄISCHE PATENTANMELDUNG

(11) **EP 4 671 955 A1**
(43) Veröffentlichungstag der Anmeldung: **31.12.2025**
(21) Anmeldenummer: 24184233.5
(22) Anmeldetag: 25.06.2024
(51) Int. Cl.: G06F 3/12, G06F 3/14

(54) **VERFAHREN ZUR DARSTELLUNG VON ANZEIGEDATEN AUF EINEM ANZEIGEGERÄT UND ANZEIGEGERÄT**

(71) Anmelder: KWS Computersysteme GmbH, 76275 Ettlingen (DE)
(72) Erfinder: Koeppen, Jan, 75334 Straubenhardt (DE)
(74) Vertreter: Christ, Niko

(57) **Zusammenfassung**

Bei vielen Gelegenheiten werden Informationen auf Bildschirmen wiedergegeben, da dies papiersparend ist und Änderungen schnell und einfach vorgenommen werden können. Insbesondere bei verteilten Informationen können diese zentral aktualisiert werden, so dass neben dem Papier auch Zeit und Energie für eine Fahr vor Ort eingespart werden kann. Zur Vereinfachung der Ausspielung von Inhalten auf den hierfür vorgesehenen Anzeigegeräten schlägt die Erfindung vor, die Anzeigegeräte über eine Schnittstelle mit einem Datenverarbeitungsgerät zu verbinden, welches das Anzeigegerät über einen Druckertreiber anspricht. Hierdurch kann durch einen einfachen Ausdruck ein darzustellendes Bild aus jeder beliebigen Software mit Druckfunktion auf dem Bildschirm ausgegeben werden.

## Beschreibung

Die vorliegende Erfindung betrifft ein Verfahren zur Darstellung von auf einem Datenverarbeitungsgerät gespeicherten Anzeigedaten auf einem Anzeigegerät mit wenigstens einem Bildschirm, wobei das Anzeigegerät mit dem Datenverarbeitungsgerät datenverbunden ist. Ebenfalls betrifft die Erfindung ein solches Anzeigegerät.

Auf dem Gebiet der Datenverarbeitung und der Anzeige von Informationen ist es üblich, dass Datenverarbeitungsgeräte wie Computer oder Server mit Anzeigegeräten wie Monitoren oder Bildschirmen verbunden sind, um visuelle Informationen darzustellen. Bekannte Systeme umfassen typischerweise direkte Verbindungen zwischen dem Datenverarbeitungsgerät und dem Anzeigegerät, wobei die Daten in Echtzeit übertragen und dargestellt werden. Diese Systeme nutzen oft verschiedene Arten von Schnittstellen, wie HDMI, VGA oder DVI, um die Datenübertragung zu ermöglichen. In vielen Fällen wird die Darstellung durch spezielle Softwareprodukte, so genannte Grafiktreiber, gesteuert, die auf dem Datenverarbeitungsgerät installiert sind und die Anzeigedaten in einem Format bereitstellen, das vom Anzeigegerät interpretiert werden kann.

Gemäß bekannter Technologien erfolgt die Steuerung der Anzeigedaten häufig durch dedizierte Anwendungen oder Treiber, die speziell für die jeweilige Hardware konzipiert sind. Diese Anwendungen bieten eine Vielzahl von Funktionen, wie die Anpassung der Auflösung, die Verwaltung mehrerer Bildschirme und die Konfiguration von Anzeigeeinstellungen. Trotz der Flexibilität und der umfangreichen Funktionen dieser Systeme gibt es jedoch einige Einschränkungen. Beispielsweise erfordert die direkte Verbindung zwischen dem Datenverarbeitungsgerät und dem Anzeigegerät oft spezielle Kabel und Anschlüsse, was die Flexibilität und Mobilität der Systeme einschränkt. Zudem kann die Installation und Konfiguration der notwendigen Software komplex und zeitaufwendig sein, insbesondere in Umgebungen mit mehreren Anzeigegeräten oder Bildschirmen.

Insbesondere ist es bei solchen Anzeigegeräten erforderlich, dass das jeweilige Datenverarbeitungsgerät stets angeschaltet bleibt und zur Verfügung steht.

Trotz der beträchtlichen Fortschritte auf dem Gebiet der Datenverarbeitung und Anzeige von Informationen besteht nach wie vor ein Bedarf an verbesserten Systemen, die eine einfachere und flexiblere Verbindung zwischen Datenverarbeitungsgeräten und Anzeigegeräten ermöglichen. Insbesondere gibt es einen Bedarf an Lösungen, welche die Komplexität der Installation und Konfiguration reduzieren und gleichzeitig eine zuverlässige und effiziente Übertragung und Darstellung von Anzeigedaten gewährleisten. Bekannte Systeme sind oft nicht in der Lage, diese Anforderungen vollständig zu erfüllen, was zu Einschränkungen in der Benutzerfreundlichkeit und der Funktionalität führt.

Es ist daher ein der vorliegenden Erfindung zugrunde liegendes technisches Problem, ein System zur Verfügung zu stellen, das die Nachteile bekannter Systeme zumindest teilweise überwindet und es ermöglicht, ein Anzeigegerät von jedem druckfähigen Datenverarbeitungsgerät zu beschicken.

Gemäß der vorliegenden Offenbarung werden diese Aufgaben durch die Merkmale der unabhängigen Ansprüche 1 und 15 gelöst. Darüber hinaus ergeben sich weitere vorteilhafte Ausführungsformen aus den abhängigen Ansprüchen und der Beschreibung.

Insoweit ist es vorgesehen, ein Verfahren zur Darstellung von auf einem Datenverarbeitungsgerät gespeicherten Anzeigedaten auf einem Anzeigegerät mit wenigstens einem Bildschirm bereitzustellen. Das Anzeigegerät ist dabei datenverbunden mit dem Datenverarbeitungsgerät, was eine nahtlose Kommunikation zwischen den beiden Geräten ermöglicht. Eine wesentliche Komponente dieses Verfahrens ist die Schnittstelle, die das Anzeigegerät mit dem Datenverarbeitungsgerät verbindet. Diese Schnittstelle wird durch das Datenverarbeitungsgerät über einen Druckertreiber angesteuert, was eine innovative Nutzung eines herkömmlichen Druckertreibers in einem neuen Kontext darstellt. Der Druckertreiber erzeugt ein Druckbild, das in einer Anzeigedatei in einem Druckerspeicher abgespeichert wird. Diese Anzeigedatei wird dann an das Anzeigegerät übertragen und auf dem Bildschirm dargestellt. Die Verwendung eines Druckertreibers und eines Druckerspeichers kann dabei helfen, die Herausforderung der effizienten Datenübertragung und -darstellung zu bewältigen, indem sie bestehende Technologien in einer neuen Weise nutzt. Diese Anordnung kann eine schnellere Darstellung der Anzeigedaten ermöglichen, da der Druckertreiber speziell für die schnelle und präzise Erzeugung von Druckbildern entwickelt wurde. Die Platzierung der Schnittstelle zwischen dem Datenverarbeitungsgerät und dem Anzeigegerät ist entscheidend, da sie eine zentrale Rolle bei der Datenübertragung spielt und sicherstellt, dass die Anzeigedaten korrekt und in hoher Qualität auf dem Bildschirm dargestellt werden. Durch die Speicherung des Druckbildes in einer Anzeigedatei im Druckerspeicher wird zudem sichergestellt, dass die Daten zwischengespeichert und bei Bedarf schnell abgerufen werden können, was die Effizienz des gesamten Systems erhöht. Diese technische Anordnung kann somit die Herausforderung der schnellen und präzisen Darstellung von Anzeigedaten auf einem Bildschirm angehen und bietet eine innovative Lösung durch die Nutzung vorhandener Drucktechnologien in einem neuen Anwendungsbereich.

Das Verfahren zur Darstellung von auf einem Datenverarbeitungsgerät gespeicherten Anzeigedaten auf einem Anzeigegerät mit wenigstens einem Bildschirm sieht vor, dass das Anzeigegerät mit dem Datenverarbeitungsgerät datenverbunden ist. Diese Datenverbindung ermöglicht die Übertragung von Anzeigedaten vom Datenverarbeitungsgerät zum Anzeigegerät, wodurch die auf dem Datenverarbeitungsgerät gespeicherten Informationen auf dem Bildschirm des Anzeigegeräts angezeigt werden können.

Gemäß einer Ausführungsform, bei der das Anzeigegerät die Anzeigedatei aus dem Druckerspeicher aufruft und diese auf dem wenigstens einen Bildschirm des Anzeigegeräts wiedergibt, wird ein spezifischer Mechanismus der Kommunikation zwischen den Komponenten etabliert, der die Effizienz und Funktionalität des dargestellten Verfahrens verbessert. Das Anzeigegerät, das mit dem Datenverarbeitungsgerät über eine Schnittstelle verbunden ist, übernimmt eine aktive Rolle im Abruf der Anzeigedatei, die zuvor durch den Druckertreiber im Druckerspeicher gespeichert wurde. Dieser Abrufprozess ermöglicht es dem Anzeigegerät, direkt auf die gespeicherten Daten zuzugreifen, ohne dass eine erneute Übertragung vom Datenverarbeitungsgerät erforderlich ist. Dies reduziert die Latenzzeit und minimiert die Belastung des Datenverarbeitungsgeräts, da die Datenverarbeitung und die Anzeige voneinander entkoppelt werden. Das Anzeigegerät fungiert somit nicht nur als passiver Empfänger, sondern als aktiver Teilnehmer im Datenfluss, was die Flexibilität und Reaktionsfähigkeit des Systems erhöht. Dies führt zu einer optimierten Nutzung der Systemressourcen und einer verbesserten Benutzererfahrung, da die Daten schneller und zuverlässiger auf dem Bildschirm dargestellt werden können. Die beschriebenen Mechanismen der Kommunikation zwischen den Komponenten tragen dazu bei, die Gesamtleistung des Systems zu steigern und die Interaktion zwischen dem Datenverarbeitungsgerät und dem Anzeigegerät zu vereinfachen, was insbesondere in Umgebungen mit hohen Anforderungen an die Datenverarbeitung und -darstellung von Vorteil ist.

Gemäß einer weiteren Ausführungsform, die im abhängigen Patentanspruch beschrieben wird, wird ein neuer Druck auf dem Druckertreiber, welcher dem Anzeigegerät zugeordnet ist, die Anzeigedatei in dem Druckerspeicher überschreiben. Ein Wechsel des dargestellten Druckbilds wird somit nur in dem Fall stattfinden, dass eine neue Anzeigedatei zur Darstellung auf dem Bildschirm vorliegt. Bis zu diesem Zeitpunkt verändert sich das dargestellte Bild in der Zwischenzeit nicht. Durch das Überschreiben der Anzeigedatei im Druckerspeicher wird zudem verhindert, dass veraltete oder unnötige Daten im Speicher verbleiben, was die Effizienz und die Kapazität des Speichers optimiert. Es muss letztlich nur ein Speicher in der Größe einer Anzeigedatei in dem Anzeigegerät bereitgehalten werden.

In einer ersten Konfiguration kann das Anzeigegerät in regelmäßigen Abständen die Anzeigedatei aus dem Druckerspeicher abrufen. Der regelmäßige Abruf stellt sicher, dass das Anzeigegerät stets die neuesten Daten anzeigt. Das Anzeigegerät muss nicht ständig auf Empfang sein, wenn es ausreichend ist, die Aktualisierung in dem vorgegebenen Takt abzurufen. Das Datenverarbeitungsgerät muss lediglich das Druckbild erzeugen und in der Anzeigedatei im Druckerspeicher abspeichern, während das Anzeigegerät die Aufgabe übernimmt, diese Datei in regelmäßigen Abständen abzurufen und anzuzeigen.

Eine alternative Konfiguration kann vorsehen, dass das Anzeigegerät einen zusätzlichen Anzeigespeicher aufweist, in den die Anzeigedatei aus dem Druckerspeicher geladen wird. Diese Erweiterung bringt mehrere Vorteile mit sich, insbesondere in Bezug auf die Effizienz und Flexibilität der Datenverarbeitung und -darstellung. Der zusätzliche Anzeigespeicher ermöglicht es dem Anzeigegerät, die Anzeigedatei lokal zu speichern, was die Abhängigkeit von der kontinuierlichen Verbindung zum Datenverarbeitungsgerät reduziert. Dies kann besonders nützlich sein in Szenarien, in denen die Verbindung instabil oder intermittierend ist, da das Anzeigegerät weiterhin die gespeicherten Daten anzeigen kann, selbst wenn die Verbindung vorübergehend unterbrochen wird. Auch wenn das Anzeigegerät zwischendurch abgeschaltet wird, kann es nach seinem Neustart hierauf zugreifen, so dass es auch bei unterbrochener Verbindung stets mit einem Druckbild versehen ist. Umgekehrt muss das Anzeigegerät dennoch regelmäßig kommunizieren, um festzustellen, ob ein neues Druckbild dargestellt werden soll und insoweit eine neue Anzeigedatei in dem Druckerspeicher vorliegt.

Gemäß einer weiteren Ausführungsform, die die Merkmale der abhängigen Patentansprüche umfasst, kann die Anzeigedatei mehrere Seiten aufweisen, wobei die mehreren Seiten der Anzeigedatei nacheinander auf dem wenigstens einen Bildschirm des Anzeigegeräts dargestellt werden. Damit erweitert sich die Funktionalität des Verfahrens zur Darstellung von Anzeigedaten erheblich. Dies ist besonders nützlich in Szenarien, in denen umfangreiche Daten oder komplexe Dokumente angezeigt werden müssen, die nicht auf eine einzige Seite passen. Diese mehrseitige Anzeigedatei wird dann an das Anzeigegerät übertragen, welches die Seiten nacheinander auf dem Bildschirm darstellt. Dies erfordert eine koordinierte Steuerung durch das Anzeigegerät, um sicherzustellen, dass die Seiten in der richtigen Reihenfolge und mit geeigneten Übergängen und in einem geeigneten zeitlichen Abstand angezeigt werden. Die Darstellung mehrerer Seiten nacheinander auf dem Bildschirm des Anzeigegeräts bringt den Vorteil mit sich, dass der Benutzer eine kontinuierliche und kohärente Ansicht des gesamten Dokuments erhält, ohne manuell zwischen verschiedenen Dateien oder Bildschirmen wechseln zu müssen. Auch erlaubt dies, kleinere Bildschirme zu nutzen, um mehr Informationen bereitzustellen. Darüber hinaus ermöglicht diese Funktion eine dynamischere und interaktivere Nutzung des Anzeigegeräts, da der Benutzer mit einer entsprechenden Taste an dem Anzeigegerät sogar aktiv durch die Seiten blättern kann, ähnlich wie bei einem physischen Dokument.

Bevorzugtermaßen ist eine Anzeigedauer der Darstellung und/oder ein Ablaufmodus hinsichtlich einer Reihenfolge in dem Anzeigegerät hinterlegt und/oder in dem Druckertreiber vorgebbar. Die Einstellbarkeit der Anzeigedauer der Darstellung ermöglicht es, die Zeitspanne zu definieren, während der die Anzeigedaten auf dem Bildschirm des Anzeigegeräts sichtbar bleiben. Dies kann entweder direkt im Anzeigegerät gespeichert und dort, etwa durch einen Regler oder eine Taste eingestellt oder durch den Druckertreiber vorgegeben und direkt in der Anzeigedatei hinterlegt werden. Der Ablaufmodus hinsichtlich einer Reihenfolge ermöglicht es, eine spezifische Abfolge der darzustellenden Anzeigedaten festzulegen. Zunächst kann vorwärts oder rückwärts abgespielt werden, dann stellt sich die Frage, wie weiter abgespielt wird, wenn alle Seiten gezeigt wurden. Hierbei kann bei Erreichen der letzten Seite wieder mit der ersten Seite begonnen oder die Reihenfolge umgekehrt durchlaufen werden. Dieser Modus kann ebenfalls entweder im Anzeigegerät hinterlegt oder durch den Druckertreiber vorgegeben werden. Die Hinterlegung dieser Parameter im Anzeigegerät bietet den Vorteil, dass die Darstellung unabhängig vom Datenverarbeitungsgerät durch den aktuellen Betrachter gesteuert werden kann, was eine höhere Autonomie und Flexibilität des Anzeigegeräts ermöglicht. Andererseits bietet die Vorgabe dieser Parameter durch den Druckertreiber den Vorteil, dass die Steuerung zentralisiert und möglicherweise einfacher zu aktualisieren ist, da Änderungen nur im Druckertreiber vorgenommen werden müssen und nicht in jedem einzelnen Anzeigegerät. Auch die Anzeigegeräte werden dadurch einfacher und weniger anfällig und haben, etwa im öffentlichen Raum, weniger Angrifssfläche.

In konkreter Ausgestaltung kann der Druckertreiber mehrere Druckfächer vorsehen, was eine differenzierte und flexible Verwaltung der Anzeigedaten ermöglicht. Diese Druckfächer fungieren als virtuelle Speicherbereiche innerhalb des Druckerspeichers und sind spezifisch konfiguriert, um unterschiedliche verbundene Anzeigegeräte oder Bildschirmbereiche eines Anzeigegeräts zu bedienen. Jedes Druckfach kann hierbei einem Anzeigegerät aus einer Gruppe mehrerer verbundener Anzeigegeräte zugeordnet sein, was bedeutet, dass der Druckertreiber in der Lage ist, gezielt Daten innerhalb eines Drucks an verschiedene Anzeigegeräte zu senden. Dies ermöglicht eine parallele und unabhängige Darstellung des Druckbilds auf verschiedenen Anzeigegeräten, was die Effizienz und Flexibilität des Systems erhöht. Darüber hinaus kann jeweils ein Druckfach mehreren Bildschirmen eines Anzeigegeräts zugeordnet sein, was besonders nützlich ist, wenn ein Anzeigegerät über mehrere Bildschirme verfügt und diese gleichartig angesteuert werden sollen. In diesem Fall können die Anzeigedaten so verwaltet werden, dass sie synchronisiert oder spezifisch auf die verschiedenen Bildschirme verteilt werden, um eine kohärente und optimierte Darstellung zu gewährleisten. Ein weiteres Merkmal ist, dass mehrere Druckfächer unterschiedlichen Bereichen eines Bildschirms eines Anzeigegeräts zugeordnet sein kann. Dies erlaubt eine noch feinere Steuerung der Anzeigedaten, indem verschiedene Bereiche eines einzelnen Bildschirms unabhängig voneinander angesteuert werden können. Diese Funktion ist besonders vorteilhaft für komplexe Anzeigeszenarien, bei denen unterschiedliche Informationen gleichzeitig und klar getrennt auf einem einzigen Bildschirm dargestellt werden müssen, wobei auch die Aktualisierungsrate sich unterscheiden kann.

Gemäß einer weiteren Ausführungsform kann es vorgesehen sein, dass es sich bei der Schnittstelle um eine parallele Schnittstelle oder eine serielle Schnittstelle, insbesondere um einen Universellen Seriellen Bus, handelt. Diese spezifische Ausgestaltung der Schnittstelle bringt mehrere technische Vorteile und Neuerungen mit sich. Eine parallele Schnittstelle ermöglicht die gleichzeitige Übertragung mehrerer Bits, was zu einer höheren Datenübertragungsrate führen kann. Dies ist besonders vorteilhaft, wenn große Datenmengen, wie etwa hochauflösende Druckbilder, schnell und effizient vom Datenverarbeitungsgerät zum Anzeigegerät übertragen werden sollen. Eine serielle Schnittstelle, insbesondere ein Universeller Serieller Bus (USB), bietet hingegen eine flexible und weit verbreitete Lösung für die Verbindung zwischen verschiedenen Geräten. Der USB-Standard ist bekannt für seine hohe Datenübertragungsrate, einfache Handhabung und breite Kompatibilität mit einer Vielzahl von Geräten und Betriebssystemen. Durch die Verwendung eines USB als serielle Schnittstelle wird die Installation und Konfiguration der Verbindung zwischen dem Datenverarbeitungsgerät und dem Anzeigegerät erheblich vereinfacht. Zudem ermöglicht der USB-Standard die Stromversorgung des Anzeigegeräts direkt über die Schnittstelle, was den Bedarf an zusätzlichen Stromkabeln und Netzteilen reduziert. Dies trägt zur Vereinfachung der Hardware-Architektur und zur Reduzierung der Gesamtkosten bei. Darüber hinaus bietet der USB-Standard die Möglichkeit, mehrere Geräte in einer Kette zu verbinden, was die Erweiterbarkeit und Flexibilität des Systems erhöht. Die Wahl zwischen paralleler und serieller Schnittstelle gibt dem Anwender die Möglichkeit, die für seine spezifischen Anforderungen und Anwendungsfälle am besten geeignete Verbindungstechnologie zu wählen. Insgesamt führen diese neuen Merkmale zu einer verbesserten Leistung, Benutzerfreundlichkeit und Flexibilität des Verfahrens zur Darstellung von Anzeigedaten, indem sie eine schnelle, zuverlässige und einfache Verbindung zwischen dem Datenverarbeitungsgerät und dem Anzeigegerät ermöglichen.

Alternativ oder ergänzend kann dabei die Schnittstelle, die das Anzeigegerät mit dem Datenverarbeitungsgerät verbindet, auch eine Netzwerkschnittstelle sein, die entweder im lokalen Netz oder im Internet betrieben wird. Dies bedeutet, dass die Kommunikation zwischen dem Datenverarbeitungsgerät und dem Anzeigegerät nicht auf eine direkte physische Verbindung beschränkt ist, sondern über ein Netzwerkprotokoll erfolgen kann, was die Flexibilität und Reichweite der Anwendung erheblich erweitert. Durch die Nutzung einer Netzwerkschnittstelle kann das Anzeigegerät unabhängig von der physischen Nähe zum Datenverarbeitungsgerät betrieben werden, was insbesondere in verteilten Systemen oder bei der Fernanzeige von Daten von Vorteil ist. Weiterhin weist das Anzeigegerät wenigstens ein Kommunikationsmittel auf, das zum Abruf der Anzeigedatei von der Netzwerkschnittstelle dient. Dieses Kommunikationsmittel kann beispielsweise ein Netzwerkadapter oder ein WLAN-Modul sein, das in der Lage ist, die Anzeigedatei, die im Druckerspeicher des Datenverarbeitungsgeräts gespeichert ist, über das Netzwerkprotokoll abzurufen. Der Abruf der Anzeigedatei erfolgt dabei vorzugsweise durch eine gezielte Anforderung des Anzeigegeräts, was eine effiziente und gezielte Datenübertragung ermöglicht. Diese neuen Merkmale bringen mehrere Vorteile mit sich. Erstens wird die Flexibilität des Systems erhöht, da die Verbindung über ein Netzwerkprotokoll eine größere räumliche Trennung zwischen den Geräten erlaubt. Zweitens wird die Skalierbarkeit verbessert, da mehrere Anzeigegeräte über das Netzwerk auf das gleiche Datenverarbeitungsgerät zugreifen können, ohne dass zusätzliche physische Verbindungen erforderlich sind. Drittens wird die Wartung und Aktualisierung des Systems vereinfacht, da Änderungen oder Upgrades am Datenverarbeitungsgerät zentral vorgenommen werden können, ohne dass physische Anpassungen an den Anzeigegeräten und bei einer verteilten Aufstellung - man denke an Busfahrpläne innherhalb eines Liniennetzes - notwendig sind. Schließlich ermöglicht die Nutzung von Netzwerkschnittstellen und Kommunikationsmitteln eine bessere Integration in bestehende IT-Infrastrukturen, wodurch die Implementierungskosten und der Integrationsaufwand reduziert werden. Diese Merkmale tragen somit wesentlich zur Verbesserung der Funktionalität und Effizienz des beschriebenen Verfahrens bei.

Weiter kann vorgesehen sein, dass es sich bei dem Druckertreiber um einen virtuellen Druckertreiber handelt. Ein virtueller Druckertreiber ist eine Softwarekomponente, welche die Funktionalität eines physischen Druckertreibers emuliert, jedoch keine physischen Druckausgaben erzeugt. Stattdessen wird das Druckbild, das normalerweise an einen physischen Drucker gesendet würde, in eine digitale Datei umgewandelt. Diese Anzeigedatei wird dann im Druckerspeicher des Datenverarbeitungsgeräts abgespeichert und anschließend an das Anzeigegerät übertragen, um dort direkt oder nach einer Ablage in dessen Anzeigespeicher auf dem Bildschirm dargestellt zu werden. Darüber hinaus erleichtert der virtuelle Druckertreiber die Integration in bestehende Softwareumgebungen, da er sich wie ein herkömmlicher Druckertreiber verhält und somit von jeder Anwendung, die Druckfunktionen unterstützt, genutzt werden kann. Dies führt zu einer erhöhten Kompatibilität und Benutzerfreundlichkeit.

Gemäß einer weiteren Ausführungsform kann es vorgesehen sein, dass es sich bei der Schnittstelle um eine drahtlose Schnittstelle handelt. Diese drahtlose Schnittstelle ermöglicht eine kabellose Kommunikation zwischen dem Datenverarbeitungsgerät und dem Anzeigegerät, was eine erhöhte Flexibilität und Mobilität der Geräteanordnung zur Folge hat. Durch die Implementierung einer drahtlosen Schnittstelle wird die Notwendigkeit von physischen Kabelverbindungen eliminiert, was nicht nur den Installationsaufwand reduziert, sondern auch die Benutzerfreundlichkeit erhöht, da die Geräte unabhängig von ihrer physischen Position zueinander kommunizieren können. Diese drahtlose Kommunikation kann über verschiedene Technologien wie Wi-Fi, Bluetooth oder andere drahtlose Übertragungsprotokolle realisiert werden, die eine stabile und schnelle Datenübertragung gewährleisten. Die drahtlose Schnittstelle wird durch das Datenverarbeitungsgerät über einen Druckertreiber angesteuert, der ein Druckbild erzeugt und dieses in einer Anzeigedatei in einem Druckerspeicher abspeichert. Diese Anzeigedatei wird dann drahtlos an das Anzeigegerät übertragen und auf dem Bildschirm des Anzeigegeräts dargestellt. Die drahtlose Übertragung der Anzeigedatei bietet den Vorteil, dass die Daten in Echtzeit oder nahezu Echtzeit übertragen werden können, was besonders in Szenarien mit häufig wechselnden Anzeigedaten von Vorteil ist. Zudem wird durch die drahtlose Verbindung die Möglichkeit eröffnet, mehrere Anzeigegeräte gleichzeitig und ohne zusätzliche Verkabelung anzusteuern, was die Skalierbarkeit des Systems erhöht. Lediglich eine Stromversorgung ist auf diese Art und Weise erforderlich.

In einer besonders bevorzugten Ausgestaltung kann es sich bei dem Bildschirm um einen E-Paper-Bildschirm handeln. Diese spezifische Ausgestaltung bringt mehrere Vorteile und technische Effekte mit sich, die die Funktionalität und Effizienz des beschriebenen Verfahrens zur Darstellung von Anzeigedaten auf einem Anzeigegerät erheblich verbessern. Ein E-Paper-Bildschirm, auch als elektronisches Papier oder E-Ink-Display bekannt, zeichnet sich durch seine Fähigkeit aus, ein Bild auch ohne kontinuierliche Stromzufuhr anzuzeigen, was zu einem deutlich geringeren Energieverbrauch im Vergleich zu herkömmlichen LCD- oder LED-Bildschirmen führt. Dies ist besonders vorteilhaft für Anwendungen, bei denen das Anzeigegerät über längere Zeiträume hinweg betrieben werden soll, ohne dass eine häufige Aufladung oder ein ständiger Netzanschluss erforderlich ist. Darüber hinaus bietet ein E-Paper-Bildschirm eine hervorragende Lesbarkeit bei verschiedenen Lichtverhältnissen, einschließlich direktem Sonnenlicht, was die Einsatzmöglichkeiten des Anzeigegeräts in unterschiedlichen Umgebungen erweitert.

Die Kommunikation zwischen dem Datenverarbeitungsgerät und dem Anzeigegerät über die spezifizierte Schnittstelle und den Druckertreiber bleibt in dieser Ausführungsform unverändert, jedoch wird das von dem Druckertreiber erzeugte Druckbild nun auf einem E-Paper-Bildschirm dargestellt. Dies bedeutet, dass die Anzeigedatei, die im Druckerspeicher abgespeichert und an das Anzeigegerät übertragen wird, speziell für die Darstellung auf einem E-Paper-Bildschirm optimiert sein kann. Dies könnte beispielsweise Anpassungen in der Auflösung oder im Kontrast umfassen, um die Vorteile der E-Paper-Technologie voll auszuschöpfen. Die Nutzung eines E-Paper-Bildschirms könnte zudem die Lebensdauer des Anzeigegeräts verlängern, da diese Bildschirme weniger anfällig für Einbrenneffekte und andere Verschleißerscheinungen sind, die bei herkömmlichen Bildschirmen auftreten können. Besonders bei Anwendungen, in denen unbewegte Bilder über längere Zeiträume angezeigt werden sollen, bevor ein Wechsel stattfindet, kann ein E-Paper-Bildschirm besonders sinnvoll und effektiv eingesetzt werden.

Zusammengefasst bringt die Verwendung eines E-Paper-Bildschirms als Anzeigegerät in dem beschriebenen Verfahren erhebliche Verbesserungen hinsichtlich Energieeffizienz, Lesbarkeit und Langlebigkeit mit sich, ohne dass Änderungen an der grundlegenden Kommunikationsstruktur zwischen den Komponenten erforderlich sind. Dies stellt eine ganz besonders vorteilhafte Weiterentwicklung des ursprünglichen Verfahrens dar, die insbesondere für Anwendungen im Bereich der mobilen und energieautarken Anzeigegeräte von großem Interesse sein könnte.

Schließlich kann es sich bei der Anzeigedatei um eine Bilddatei, eine Textdatei, vorzugsweise im PDF-Format, oder um eine HTML-Datei handeln. Durch die Definition der Anzeigedatei als Bilddatei, Textdatei, PDF-Datei oder HTML-Datei wird die Flexibilität und Kompatibilität des Systems erheblich erhöht.

Bilddateien ermöglichen die Darstellung von grafischen Inhalten in hoher Qualität, was besonders für Anwendungen mit visuellen Anforderungen von Vorteil ist. Textdateien bieten eine einfache und effiziente Möglichkeit, textbasierte Informationen darzustellen, die leicht zu bearbeiten und zu durchsuchen sind. Die Verwendung des PDF-Formats bringt zusätzliche Vorteile, da PDF-Dateien plattformunabhängig sind und eine konsistente Darstellung auf verschiedenen Geräten gewährleisten. PDFs sind zudem weit verbreitet und unterstützen eine Vielzahl von Inhalten, einschließlich Text, Bilder und Vektorgrafiken, was sie zu einem vielseitigen Format für die Anzeigedatei macht. HTML-Dateien ermöglichen die Darstellung von Inhalten, die interaktiv und dynamisch sind, was besonders für Webanwendungen und internetbasierte Inhalte von Bedeutung ist. Durch die Unterstützung von HTML-Dateien kann das Anzeigegerät auch Inhalte darstellen, die aus dem Internet stammen oder webbasierte Technologien nutzen. Diese Vielfalt an Dateiformaten stellt sicher, dass das System in verschiedenen Anwendungsbereichen und für unterschiedliche Anforderungen eingesetzt werden kann.

Die vorstehend beschriebene Erfindung wird im Folgenden anhand eines Ausführungsbeispiels näher erläutert.

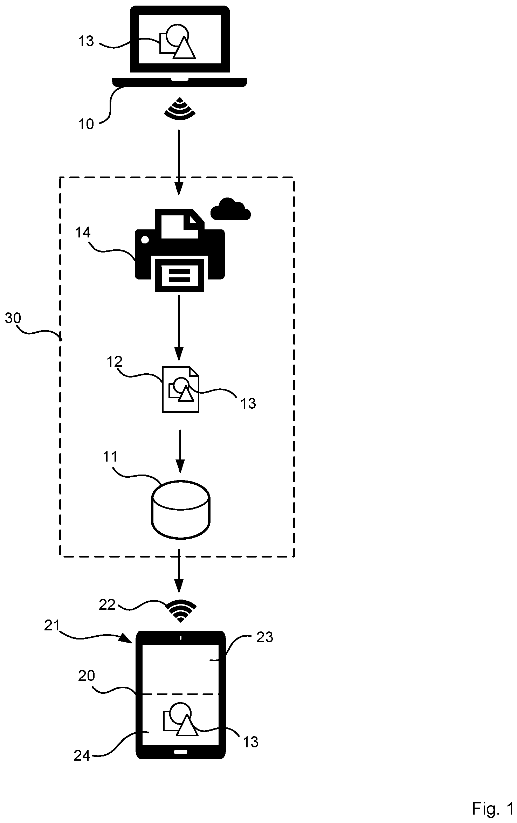

Es zeigt
- Figur 1: eine schematische Darstellung eines Systems zur Darstellung von auf einem Datenverarbeitungsgerät gespeicherten Anzeigedaten auf einem Anzeigegerät. Das Datenverarbeitungsgerät ist über eine Schnittstelle mit einem Druckertreiber verbunden, der ein Druckbild erzeugt und in einer Anzeigedatei in einem Druckerspeicher speichert. Diese Anzeigedatei wird dann an das Anzeigegerät übertragen und auf dessen Bildschirm dargestellt.

Figur 1 zeigt eine schematische Darstellung eines Systems zur Darstellung von auf einem Datenverarbeitungsgerät 10 gespeicherten Anzeigedaten auf einem Anzeigegerät 20 mit wenigstens einem Bildschirm 23. Das Datenverarbeitungsgerät 10 ist mit dem Anzeigegerät 20 über eine Schnittstelle 30 verbunden. Die Schnittstelle 30 wird durch das Datenverarbeitungsgerät 10 über einen Druckertreiber 14 angesteuert.

Das Datenverarbeitungsgerät 10 erzeugt zunächst ein Druckbild 13 mittels des Druckertreibers 14, beispielsweise einen Busfahrplan. Jedes Anzeigegerät 20, das im System vorgesehen und mit dem Datenverarbeitungsgerät 10 verbunden ist, weist einen eigenen Druckertreiber 14 auf, so dass ausgehend von dem Datenverarbeitungsgerät 10 jedes Anzeigegerät 20 durch Auswahl im Druckdialog des Datenverarbeitungsgeräts 10 gewählt werden kann. Innerhalb des Druckdialogs kann dann auch eine Auswahl eines Bereichs 24 in der Art der Auswahl einer Papierkassette eines Druckers vorgenommen werden. Dies kann, um im Bild des Busfahrplans zu bleiben, etwa eine Werbeeinblendung in einem Bereich 24 des Bildschirms 23 sein, die auch häufiger wechseln kann. Um einen solchen Wechsel zu erreichen, kann ein mehrseitiger Druck vorgenommen werden, in diesem Fall wird das Anzeigegerät 20 die Seiten nacheinander ausgeben, wobei eine als Parameter vorgebbare oder am Gerät einstellbare Zeitspanne vergeht, bevor ein Bildwechsel stattfindet.

Das Druckbild 13 wird nunmehr in einer Anzeigedatei 12 gespeichert, die sich in einem Druckerspeicher 11 befindet. Die Anzeigedatei 12 wird anschließend über die Schnittstelle 30 an das Anzeigegerät 20 übertragen. Das Anzeigegerät 20 ruft die Anzeigedatei 12 aus dem Druckerspeicher 11 ab und stellt das Druckbild 13 auf dem Bildschirm 23 dar. Das Anzeigegerät 20 kann die Anzeigedatei 12 in regelmäßigen Abständen aus dem Druckerspeicher 11 abrufen, um sicherzustellen, dass stets die aktuellste Version der Anzeigedatei 12 dargestellt wird.

Das Anzeigegerät 20 verfügt über einen zusätzlichen Anzeigespeicher 21, in den die Anzeigedatei 12 geladen wird. Auf diese Weise kann auch nach einem Neustart des Anzeigegeräts 20, auch wenn das Datenverarbeitungsgerät nicht mehr erreichbar sein sollte, die Anzeigedatei 12 erneut geladen werden und ohne weitere Kommunikation nach außen wieder das gewünschte Druckbild 13 dargestellt werden. Das Anzeigegerät 20 erhält jedoch bei Bedarf eine Nachricht vom Druckertreiber 14, wenn eine neue Anzeigedatei 12 im Druckerspeicher 11 vorliegt. Dies ermöglicht eine automatische Aktualisierung der angezeigten Daten.

Die Schnittstelle 30 kann eine parallele Schnittstelle oder eine serielle Schnittstelle, insbesondere einen Universellen Seriellen Bus, umfassen. Alternativ kann die Schnittstelle 30 eine, bedarfsweise drahtlose, Netzwerkschnittstelle im lokalen Netz oder im Internet sein, wobei das Anzeigegerät 20 wenigstens ein Kommunikationsmittel 22 zum Abruf der Anzeigedatei 12 von der Netzwerkschnittstelle aufweist. Gerade bei einem Busfahrplan, der an den verschiedenen Bushaltestellen einer Linie aushängt, liegen die Anzeigegeräte 20 weit auseinander, so dass es ein großer Vorteil ist, das Anzeigegerät 20 aus der Ferne zu beschicken.

Der Bildschirm 23 des Anzeigegeräts 20 kann hierbei ein E-Paper-Bildschirm sein, der auch ohne weitere Stromzufuhr über längere Zeit hinweg das Bild deutlich lesbar anzeigt. Die Anzeigedatei 12 kann eine Bilddatei, eine Textdatei, vorzugsweise im PDF-Format, oder eine HTML-Datei sein.

Vorstehend beschrieben sind somit ein Verfahren und ein Anzeigegerät, welche es ermöglichen, einen Bildschirm aus jeder beliebigen druckfähigen Anwendung heraus mit einem Druckbild zu beschicken.

### BEZUGSZEICHENLISTE

- 10: Datenverarbeitungsgerät
- 11: Druckerspeicher
- 12: Anzeigedatei
- 13: Druckbild
- 14: Druckertreiber
- 20: Anzeigegerät
- 21: Anzeigespeicher
- 22: Kommunikationsmittel
- 23: Bildschirm
- 24: Bereich
- 30: Schnittstelle

## Patentansprüche

1. Verfahren zur Darstellung von auf einem Datenverarbeitungsgerät (10) gespeicherten Anzeigedaten auf einem Anzeigegerät (20) mit wenigstens einem Bildschirm (23), wobei das Anzeigegerät (20) mit dem Datenverarbeitungsgerät (10) datenverbunden ist,
**dadurch gekennzeichnet, dass** das Anzeigegerät (20) mit dem Datenverarbeitungsgerät (10) über eine Schnittstelle (30) verbunden ist, wobei die Schnittstelle (30) durch das Datenverarbeitungsgerät (10) über einen Druckertreiber (14) angesteuert wird und ein von dem Druckertreiber (14) erzeugtes Druckbild (13) in einer Anzeigedatei (12) in einem Druckerspeicher (11) abspeichert und diese an das Anzeigegerät (20) übertragen und auf dem wenigstens einen Bildschirm (23) des Anzeigegeräts (20) dargestellt wird.

2. Verfahren gemäß Anspruch 1, **dadurch gekennzeichnet, dass** das Anzeigegerät (20) die Anzeigedatei (12) aus dem Druckerspeicher (11) aufruft und auf dem wenigstens einen Bildschirm (23) des Anzeigegeräts (20) wiedergibt.

3. Verfahren gemäß Anspruch 2, **dadurch gekennzeichnet, dass** ein neuer Druck auf dem Druckertreiber (14), welcher dem Anzeigegerät (20) zugeordnet ist, die Anzeigedatei (12) in dem Druckerspeicher (11) überschreibt.

4. Verfahren gemäß einem der vorhergehenden Ansprüche, **dadurch gekennzeichnet, dass** das Anzeigegerät (20) die Anzeigedatei (12) in regelmäßigen Abständen aus dem Druckerspeicher (11) abruft.

5. Verfahren gemäß einem der Ansprüche 1 bis 3, **dadurch gekennzeichnet, dass** das Anzeigegerät (20) einen zusätzlichen Anzeigespeicher (21) aufweist, in den die Anzeigedatei (12) geladen wird, wobei das Anzeigegerät (20) eine Nachricht von dem Druckertreiber (14) erhält, wenn eine neue Anzeigedatei (12) in dem Druckerspeicher (11) vorliegt.

6. Verfahren gemäß einem der vorhergehenden Ansprüche, **dadurch gekennzeichnet, dass** die Anzeigedatei (12) mehrere Seiten aufweisen kann, wobei die mehreren Seiten der Anzeigedatei (12) nacheinander auf dem wenigstens einen Bildschirm (23) des Anzeigegeräts (20) dargestellt werden.

7. Verfahren gemäß Anspruch 6, **dadurch gekennzeichnet, dass** eine Anzeigedauer der Darstellung und/oder ein Ablaufmodus hinsichtlich einer Reihenfolge in dem Anzeigegerät (20) hinterlegt und/oder in dem Druckertreiber (14) vorgebbar ist.

8. Verfahren gemäß einem der vorhergehenden Ansprüche, **dadurch gekennzeichnet, dass** der Druckertreiber (14) mehrere Druckfächer vorsieht, wobei jeweils ein Druckfach einem Anzeigegerät (20) aus einer Gruppe mehrerer verbundener Anzeigegeräte und/oder mehreren Bildschirmen eines Anzeigegeräts (20) und/oder mehreren Bereichen eines Bildschirms (23) eines Anzeigegeräts (20) zugeordnet sind.

9. Verfahren gemäß einem der vorhergehenden Ansprüche, **dadurch gekennzeichnet, dass** es sich bei der Schnittstelle (30) um eine parallele Schnittstelle oder eine serielle Schnittstelle, insbesondere um einen Universellen Seriellen Bus, handelt.

10. Verfahren gemäß einem der Ansprüche 1 bis 8, **dadurch gekennzeichnet, dass** es sich bei der Schnittstelle (30) um eine Netzwerkschnittstelle im lokalen Netz oder im Internet handelt, wobei das Anzeigegerät (20) wenigstens ein Kommunikationsmittel (22) zum Abruf der Anzeigedatei (12) von der Netzwerkschnittstelle aufweist.

11. Verfahren gemäß Anspruch 10, **dadurch gekennzeichnet, dass** es sich bei dem Druckertreiber (14) um einen virtuellen Druckertreiber handelt.

12. Verfahren gemäß einem der vorhergehenden Ansprüche, **dadurch gekennzeichnet, dass** es sich bei der Schnittstelle (30) um eine drahtlose Schnittstelle handelt.

13. Verfahren gemäß einem der vorhergehenden Ansprüche, **dadurch gekennzeichnet, dass** es sich bei dem Bildschirm (23) um einen E-Paper-Bildschirm handelt.

14. Verfahren gemäß einem der vorhergehenden Ansprüche, **dadurch gekennzeichnet, dass** es sich bei der Anzeigedatei (12) um eine Bilddatei, eine Textdatei, vorzugsweise im PDF-Format, oder um eine HTML-Datei handelt.

15. Anzeigegerät mit einem Gehäuse mit wenigstens einem Bildschirm (23) zur Darstellung von Anzeigedaten sowie einer Schnittstelle (30) zur Datenverbindung mit einem Datenverarbeitungsgerät (10), **dadurch gekennzeichnet, dass** das Anzeigegerät (20) mit dem Datenverarbeitungsgerät (10) über eine Schnittstelle (30) verbunden ist, welche über einen Druckertreiber (14) des Datenverarbeitungsgeräts (10) ansteuerbar ist und einen Anzeigespeicher (21) aufweist, in dem ein von dem Druckertreiber (14) erzeugtes Druckbild (13) in einer Anzeigedatei (12) speicherbar und diese auf dem wenigstens einen Bildschirm (23) darstellbar ist.

16. Anzeigegerät gemäß Anspruch 15, **dadurch gekennzeichnet, dass** dem Gehäuse eine parallele oder serielle Schnittstelle oder eine Netzwerkschnittstelle zugeordnet ist.

17. Anzeigegerät gemäß einem der Ansprüche 15 oder 16, **dadurch gekennzeichnet, dass** der Bildschirm ein E-Paper-Bildschirm ist.
